# EUROPEAN PATENT APPLICATION

(11) **EP 0 899 595 A2**
(43) Date of publication of application: **03.03.1999**
(21) Application number: 98304748.1
(22) Date of filing: 17.06.1998
(51) Int. Cl.: G02B 26/02, H01S 3/02

(54) **Method and apparatus for actuating a shutter**

(30) Priority: 05.07.1997 GB 9714134
(71) Applicant: LUMONICS LTD., Swift Valley Rugby Warwickshire, CV21 1QN (GB)
(72) Inventor: Edwards, Glyn Richard, Crick, Northamptonshire NN6 7GB (GB); Goethals, Walther Albert E., 5685 AZ Best (NL); Keightley, Michael Rodney, Rugby, Warwickshire CV22 7RG (GB)
(74) Representative: Kensett, John Hinton

(57) **Abstract**

A method of actuating a shutter affecting the path of a laser beam, the shutter element being driven by a voice coil mechanism, the method comprising applying a drive current to the coil for a first period of travel; reversing the current direction to provide a braking force for a second period of travel; electrically damping the movement of the coil during a final part of movement of the coil, and alternating between electrical damping and an electrical holding current.

## Description

This invention relates to a method and apparatus for actuating a shutter. In particular, it relates to a shutter for interrupting and/or controlling the passage of a light beam such as a laser beam.

Safety regulations generally require that a laser is provided with a device for ensuring that humans are not exposed to unintentional or unexpected laser radiation. The device is generally known as a shutter. The shutter may, with a low power laser, be a device that blocks the beam path and absorbs the incident beam. In the case of high power lasers, an absorbing element would not be suitable and the shutter then generally comprises a reflective element in the form of a moving mirror which moves between a shutter-open and shutter-closed position. In the shutter-open position the mirror does not intercept the laser beam and the beam passes down a desired beam delivery path. In the shutter-closed position, the mirror fully intercepts the incident beam and deflects it from the delivery path, usually into an absorber which is generally known as a beam dump. In alternative embodiments, the direct line path from the laser is to a beam dump and the shutter element (eg. mirror) is moved into a position to reflect the laser beam into a beam delivery path.

In addition to performing a safety function, a laser shutter can also control passage of the laser beam, ie. in effect switch the laser beam on or off, and this is particularly useful when performing a material processing operation on a workpiece since it is often inconvenient to switch a laser on and off continually to achieve the desired effect. In some operations, such as to make a discontinuous seam weld over a short distance, the laser beam must be transmitted, then blocked, in a very short time of typically 20 to 30 ms. In a linear shutter configuration the laser beam diameter may be such that the shutter element has to move through a distance of, for example, 30 mm during that time. Thus, very high translation speeds of the shutter element must be achieved whilst avoiding shock and vibration so as to prolong the operating life of the shutter and avoid undesired effects on the laser itself.

In order to achieve the high switching speeds required, a so called 'voice coil' can be used as the actuator. Voice coil actuators are well known direct drive limited-motion devices that utilise a permanent magnetic field and a coil winding to produce a force on the winding proportional to the current in the coil. By altering the direction of current in the coil, the direction of force on the voice coil is reversed. The motion of the coil in each case is usually in a direction parallel to the axis of the coil. In order to achieve rapid transit times with minimum shock and vibration, a preferred motion is to accelerate and then brake the moving parts in a triangular velocity-time profile. To achieve this, a high current is fed into a coil during the initial half of a traverse to provide acceleration. Then, at the mid-point of travel, the direction of current is reversed. The reversed current generates a braking force and, in an ideal set of conditions, the voice coil would then come to a halt at precisely the right position.

The timing of the current reversal is extremely critical. For example, with the actuator arranged to have a 30 ms transit time, the changeover has to be set to be within 0.1 ms accurate to give smooth operation with no bounce at the end stop. If the current amplitudes and durations are not precisely correct, for example because of temperature effects or the effects of friction, then the coil may either stop short of the desired position or it could overrun and crash into an end stop, causing damage. If the braking current overcompensates the initial 'motor' current, then the coil assembly may start to travel back in a direction from which it started at the wrong time.

Furthermore, for laser applications it is often desired to operate a shutter assembly vertically so that, for fail-safe operation when no current is applied, the coil and its associated shutter element drop under the action of gravity to a lower, safe, position at which the beam is either deflected to a beam dump or is allowed to pass straight through to a beam dump. The effects of gravity are therefore important and, also, a means must be found to hold the voice coil when desired at its uppermost position.

According to the present invention there is provided A method of actuating a shutter element affecting the path of a laser beam, the shutter element being driven by an electrically conductive coil mechanism, the method comprising applying a drive current to the coil for a first period of travel; reversing the current direction to provide a braking force for a second period of travel; and, during a third period, alternating between periods of electrical damping and periods in which an electrical holding current is applied.

The electrical damping may be achieved by effectively shorting the terminals of the coil. This may be achieved by a bridge mechanism in some embodiments.

The alternating period may be initiated at a predetermined distance from the desired end of travel position.

According to the present invention in a second aspect there is provided an actuator for a shutter for a laser beam, comprising an electrically conductive coil movable in a permanent magnetic field when a current is applied to the coil, and connected to move a shutter element when the coil moves; and means for providing electrical current to the coil, wherein the current-providing means comprises means for applying a drive current in a first direction; means for applying a braking current in the reverse direction; and means for alternating between periods of electrical damping and periods of electrical holding.

Embodiments of the invention will now be described, by way of example only, with reference to the accompanying drawings, in which:
Figures 1(a) and (b) show schematically a shutter mirror positioned respectively out of, and in, the path of a laser beam to affect the delivery path;
Figure 2 shows schematically a voice coil actuator;
Figure 3 is an explanatory diagram;
Figures 4 (a) and (b) show an embodiment of the invention;
Figure 5 shows the velocity of a drive coil against position for an embodiment of the invention;
Figure 6(a) shows a drive circuit;
Figures 6(b), (c) and (d) show part of the circuit of Figure 6(a) in different phases;
Figures 7, 8 and 9 show diagrams of current against time;
Figure 10 shows a flow diagram of an optimisation routine; and
Figures 11(a) and (b) show an apparatus in which an additional pointing beam and associated directing mechanism are included.

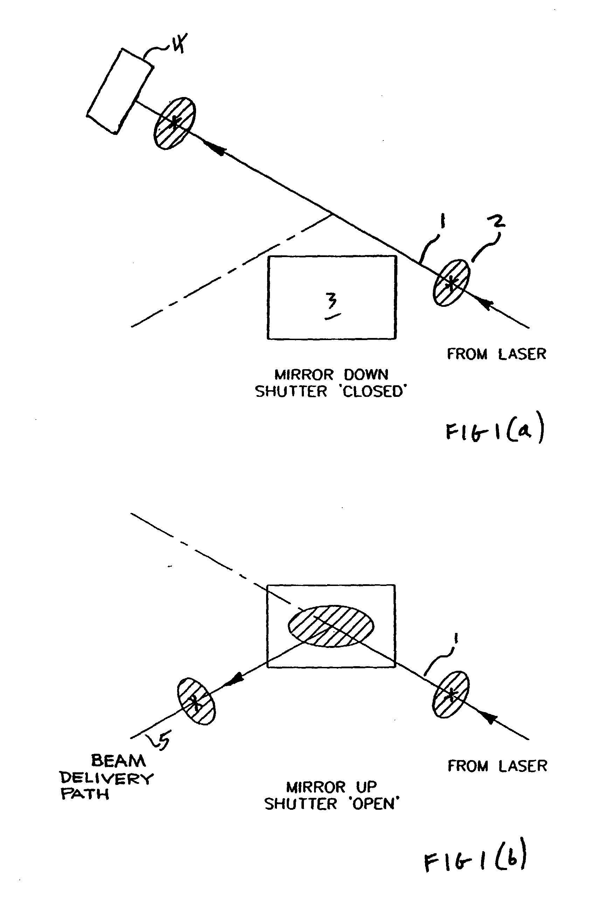

Figure 1 illustrates generally the effect of a shutter on a laser beam. A laser beam travels along a path 1 (the diagram illustrates the axis of the path and also the approximate diameter of the beam 2). At a first point in time, a reflective shutter mirror 3 is positioned out of the beam path and so the beam travels to a beam dump 4 where it is absorbed. In Figure 1(b) the shutter mirror is moved to a position where it intercepts the laser beam 1. The shutter mirror reflects the beam to a beam delivery path 5. The shutter mirror must generally be relatively quickly moved between the two positions and, as shown, is movable vertically so that if drive current fails then, as a safety measure, the shutter mirror drops under gravity to its lower position shown in Figure 1(a), thus allowing the laser to pass safely to the beam dump 4.

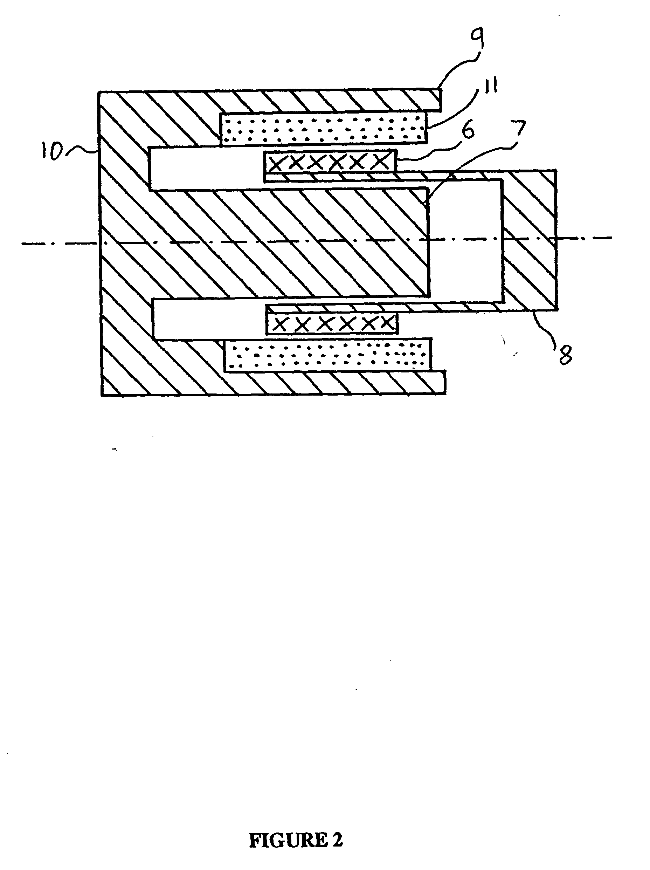

Figure 2 shows schematically a voice coil mechanism. A coil 6 is arranged to slide axially with regard to a steel core 7. The coil is attached to a support 8 which moves with the coil and which bears a mirror forming a shutter (not shown). A steel cylinder 9 is coaxial with and surrounds the steel core 7 and is integral therewith at their respective base portions 10. The steel cylinder mounts a permanent magnet 11 which applies a magnetic field across coil 6. In use, a current is applied to the coil 6 and, depending upon the direction of the current, the coil moves axially in one direction or the other. The amount of current determines the force on the coil and thereby its acceleration and velocity.

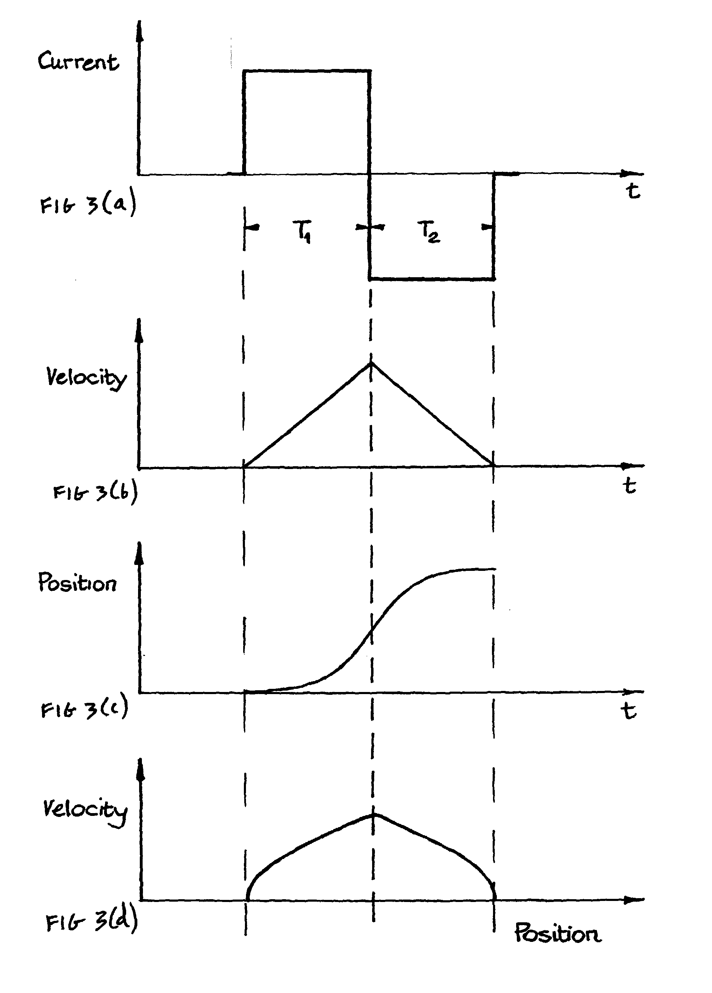

In order to achieve short transit times with minimum shock and vibration, a preferred motion is to accelerate and then brake the moving parts in a triangular velocity-time profile. Figure 3(a) shows how, in order to achieve this, a current (typically of 3-4 amperes) is fed into the coil during the initial half of the traverse (the motor phase) to provide acceleration. Then, during the second half of the traverse (the braking phase) the direction of the current is reversed. Current is applied in the first direction during a time T₁ and the second direction during a time T₂ which, in ideal conditions, would be equal. Figure 3(b) shows how this current produces a velocity profile which is triangular. Figure 3(c) illustrates the position of the coil against time and Figure 3(d) illustrates the velocity of the coil against position. It should be noted that the differential of velocity against position at the end of travel is infinite. Consequently, if the current amplitudes and durations are not precisely correct, for example because of temperature effects or the effects of friction, then the coil may stop short of the desired position or may overrun the desired position and crash into the end stop. The present invention provides a method of improving the situation.

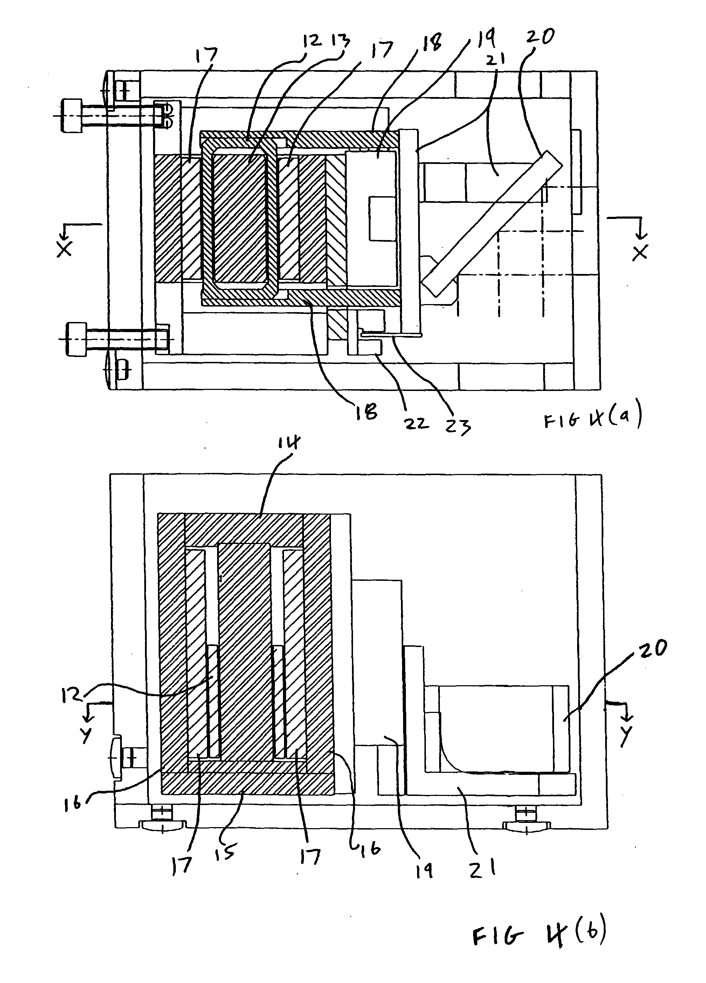

Figures 4(a) and (b) illustrate in more detail an embodiment of the present invention. Figure 4(a) shows a plan view combined with a section on Y-Y, and Figure 4(b) shows a side elevation combined with a section on X-X.

In the embodiment, a rectangular coil 12 is arranged to move up and down a close fitting rectangular steel central vertical core 13 which terminates in respective extended steel top and bottom pieces (14,15) that are attached to vertical side members 16 to form two magnetic circuits with the central core. Permanent bar magnets 17 are mounted on the inner face of each respective side member and the coil 12 moves in a close fitting gap between the permanent magnets and the central core. The coil is carried by two aluminium side plates 18 that extend from a face plate mounted on the moving element of a linear slide 19. The moving element thereby moves with the coil 12 and is directly connected to a mirror 20 held in a mirror holder 21 to move the mirror.

A further mirror mechanism forming part of an auxiliary laser beam pointing system may also be moved with the main mirror, as described further below.

Electrical connections (not shown in Figure 4) are made to the coil so that when current is applied in a first direction through the coil, the coil moves upwards and if the current direction is reversed, the force on the coil is reversed.

In order to reduce the criticality of the timing in switching from the motor phase to the braking phase, two related measures are added to the control scheme outlined above. Electrical damping is provided during the final part of the traverse (the 'damping phase'); and the transition from the braking phase to the damping phase is initiated at a predetermined distance from the desired end of travel position.

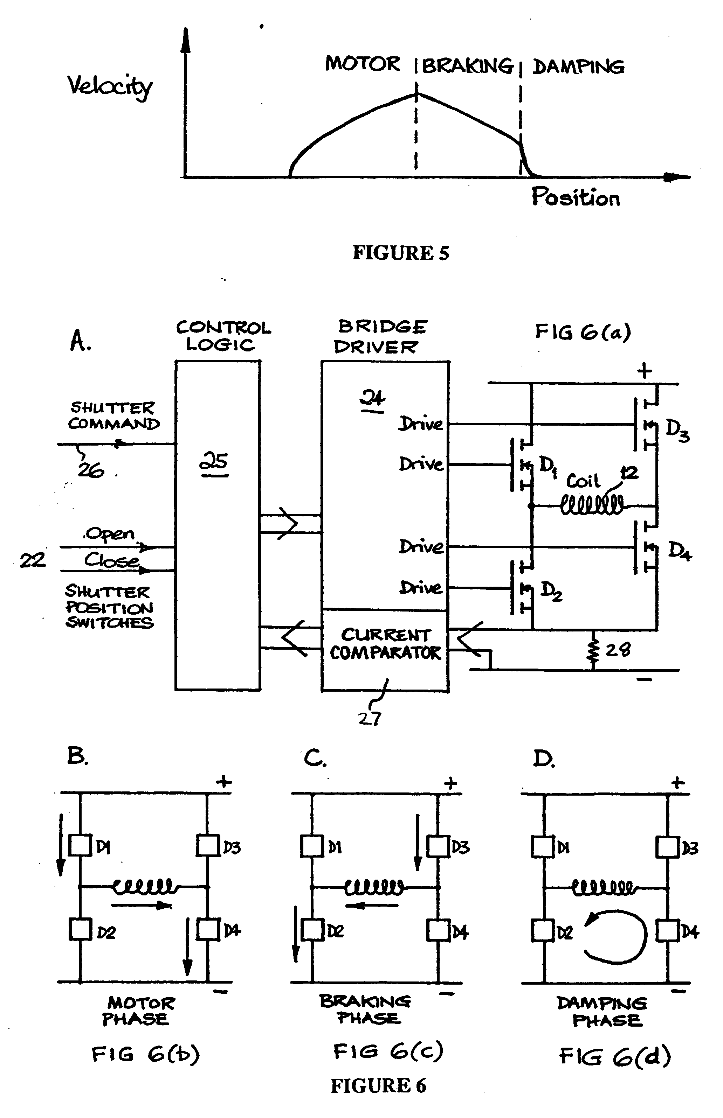

Damping may be achieved by effectively shorting the terminals of the coil. When this is done, the kinetic energy of the moving parts is converted into heat in the voice coil. Because the coil is moving in a magnetic field, a voltage is induced across the coil, which voltage is proportional to its instantaneous velocity. This results in a current flow which in turn generates a force on the coil that resists its motion. The effect of damping is seen schematically in Figure 5 in which, during a third phase of movement(the 'damping phase'), the differential of velocity against position at the end of travel is much reduced, which results in a 'soft landing' and much less risk of a crash or bounce at the end-stop if the values of T₁ and T₂ are not precisely correct.

The transition from the braking phase to the damping phase may conveniently be triggered by means of proximity switches that detect the position of the coil relative to the shutter assembly. In one embodiment, the switch is a Hall effect switch 22 actuated by a steel vane 23 mounted on the face plate of the linear slide. In a preferred embodiment, two such switches are provided, each being located approximately 3 mm from each end of travel position.

Figure 6(a) shows a drive circuit for supplying current to the voice coil. The coil 12 is supplied with current from a semiconductor bridge comprising four elements D₁, D₂, D₃ and D₄ which are controlled by a bridge driver 24. The bridge driver in turn receives control signals from a control logic unit 25 which responds to the state of a shutter command signal 26 and the state of the shutter position (proximity) switches 22. Devices D₁ to D₄ are MOSFETS in the preferred embodiment but may be other devices which have the ability to conduct current in either direction. They are arranged in a bridge configuration and are controlled so that during the initial motor phase, the average current through the voice coil flows in a direction shown in Figure 6(b) (ie. left to right in the Figure). Then, during the braking phase, the average current through the coil flows in the reverse direction as shown in Figure 6(c) . Subsequently, in the damping phase (Figure 6(d)) devices D₂ and D₄ are turned on, thus allowing current in the coil to circulate through D₂ and D₄. This is equivalent to shorting the coil because, when turned on, D₂ and D₄ have low impedance.

The current through the coil is output across a resistance 28 and measured by a current comparator 27. The design of current comparators is well known. It may comprise a differential amplifier arrangement for example, comparing the current to a fixed reference.

Instead of the four quadrant switching technique described above, the mode of operation of the bridge may alternatively employ other techniques, such as divided current chopping and steering techniques. Also, the semiconductor bridge may be controlled by other methods, eg. maximum-minimum (ie. hysteresis) control in which current rise is halted when the current reaches a maximum value and current fall is halted when it reaches a minimum value. Alternatively, techniques such as fixed frequency, variable duty cycle control may be used or other techniques. In principle, the bridge could be replaced by other means such as a linear amplifier, for example, utilising current feedback, to drive the voice coil.

In a further modification, the coil may be energised without current control (from a voltage source). Current could then be controlled only by the resistance and inductance of the coil.

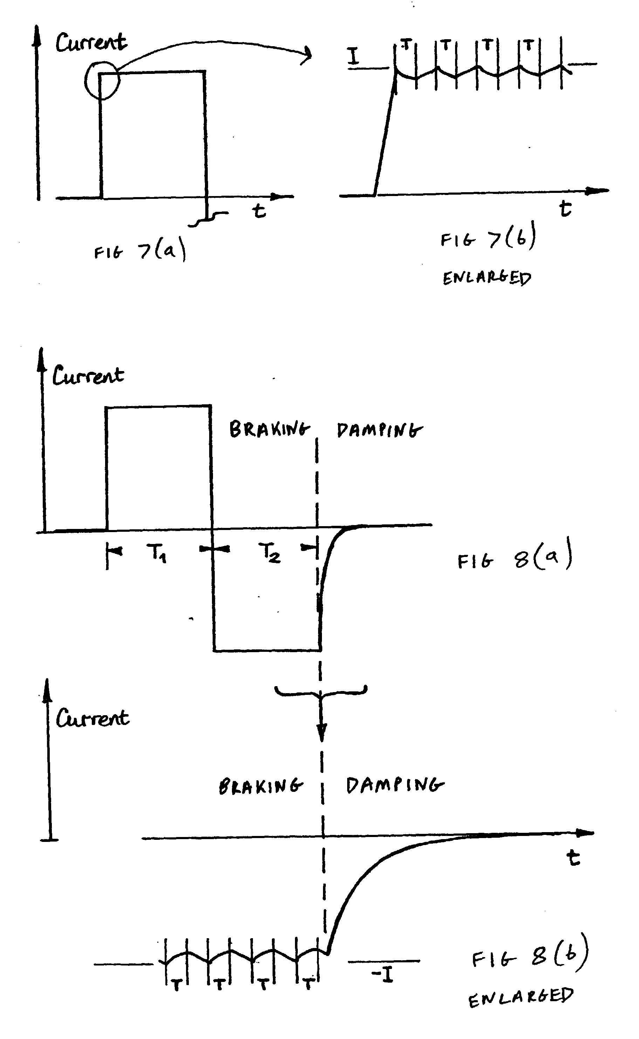

During the motor phase of the embodiment shown in Figure 6, coil current is preferably controlled at a constant value as shown in Figure 7, which illustrates the motor phase, and this may be achieved by using a constant-off-period method. Figure 7(b) is an enlarged view of Figure 7(a) illustrating the beginning of the motor phase. According to the method used, the drive circuit supplies increasing current to the coil and this is sensed by a current comparator 27. When the current reaches a predetermined value I, the current supply is then turned off for a fixed off-period T. In a preferred embodiment, the value of T is approximately 50 ms. In the drive circuit shown in Figure 6, during the current supply period devices D₁ and D₄ are turned on and during the off-period only devices D₂ and D₃ are turned on, thus forcing the current to partially decay. The coil has both resistance R and inductance L and therefore resists rapid change of current. At the end of the off-period T, devices D₁ and D₄ are turned on again and current supply to the coil resumes until the current again reaches a value I and the next off-period begins and this is continued for the duration of the motor (acceleration) phase. The length of the on-period may also be typically of 50 ms or so, giving a duty cycle for the current drive of about 50%. With this technique, the value of I and/or the duty cycle can be selected to achieve the desired mean level of driving current which may typically be 3.5A.

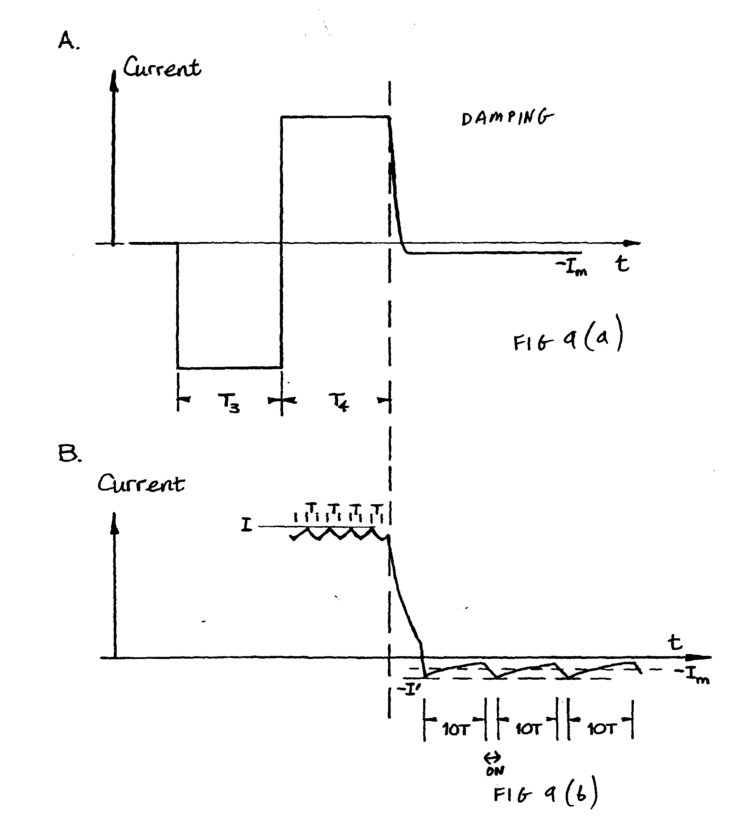

An analogous mode of current control applies during the braking phase. In this case, the current comparator switches to an off-period when the current level reaches minus I. This situation is shown in Figure 8(a) and (b) for the downwards traverse of the coil. When the braking phase terminates, the damping phase begins; the coil is then effectively shorted and so the current decays to zero. Figure 8(b) shows the transition to the damping phase on an expanded timescale.

However, Figure 8 does not apply to the upward traverse, because there is a need to supply current to the coil at the upper end of the traverse firstly to prevent the coil assembly from falling under gravity at the end of the damping phase, and secondly to serve to pull the coil assembly up against the upper end-stop. This is important because it is vital that the coil assembly starts each traverse - upward and downward - from a consistent datum position.

If the current direction for the motor phase on a downward stroke is positive, then the current directions during the upward traverse are as shown in Figure 9. Figure 9(b) shows the transition from braking phase to damping phase of the upward traverse on an expanded timescale. After a motor phase of duration T₃ of constant mean current (typically -3.5A), there is a braking phase of duration T₄ and constant mean current of typically +3.5 A. This is followed by a damping phase which terminates in a steady low level negative holding current -Iₘ.

During the braking phase, as before the current hunts between an upper limit I at which the current comparator cuts off the current drive to the coil, and a lower level which is achieved during fixed off-period T, during which the current decays. On switching to the damping phase, an off-period commences and the current comparator limit is changed from I to -I' where I' is significantly less than I.

During off-periods in the damping phase, the coil is effectively shorted, for example by turning 'on' relevant devices in the bridge shown in Figure 6. The off-periods are, however, increased from the value T of typically 50 ms that are applied during the motor- and braking-phases, typically to 10 T, ie. approximately 500 ms. During on-periods, the current supply stays on until a current level of -I' is reached, at which time an off-period of 10 T starts.

Accordingly, when the damping phase commences, the coil is shorted and the current starts to fall. At the end of the first off-period, the current supply drives the current down past zero to -I, at which point the next off-period commences. The current level then decays because the coil is shorted but is then restored to -I' during the next on-period. The value of I' may be set to an appropriate level so that, during this steady state, the mean current Iₘ is sufficient to hold the coil assembly at the upper position against gravity. In the preferred embodiment, Iₘ is about 600 mA. This is approximately twice the value required to hold the coil assembly stationary against gravity. It will be noted that during the damping phase (ie. alternate shorting/holding) the current on-period is typically around 50 ms and so the duty cycle is 50/550 = 9% compared to 50% during the motor and braking phases. That is, during the damping phase the coil is shorted for about 91% of the time.

The steady state damping conditions apply until the shutter is commanded to return to the closed (ie. lower) position.

After the damping phase shown in Figure 9, the current profile reverts to that shown in Figure 7 at the start of the next downward motor phase. Thus, the driving (motor) phase will actually commence from a negative current value (mean value -Iₘ) and not from zero as is shown in Figure 7, since the coil will initially be sitting stationary at the upper end-stop.

Notwithstanding the fact that damping is provided at the end of travel, it is still vital to select the correct values for times T₁, T₃ and T₂, T₄ for respective durations of the motor and braking phases for each traverse. If these are not correctly selected, then the motion will not be as required.

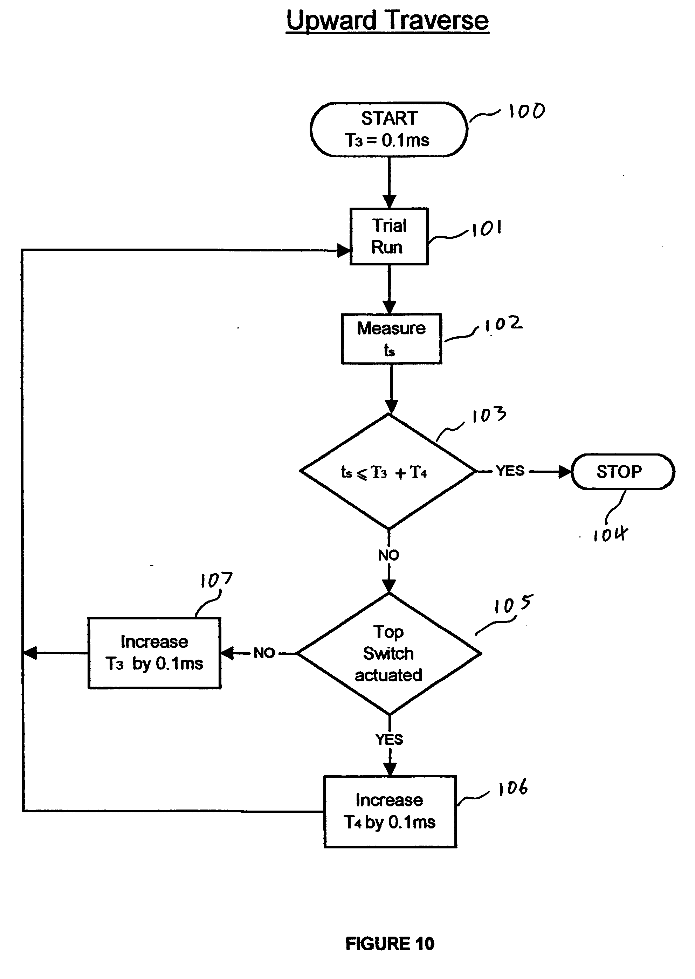

In embodiments of the invention, initial values of T₁ to T₄ are determined by means of software which involves an initialisation routine which is summarised in the flow diagram of Figure 10. For the determination of times T₃ and T₄, the coil assembly is initially at the lower end-stop where holding current is applied alternately with shorting, similar to the damping phase shown in Figure 9. The program runs a series of trials in which the coil assembly is energised in turn with a series of current profiles and the system determines whether the upper proximity switch 22 has been actuated as a result of the ensuing motion. At the end of each trial current profile, the damping phase resumes, with the result that the coil assembly drifts gently down to the bottom end-stop under the alternating effect of shorting and holding current. As it proceeds down, the lower proximity switch 22 is actuated. On each trial run the program therefore checks to see whether the upper switch was actuated before the lower switch was actuated. In addition, the time interval tₛ, from the start of the motor current pulse to the instant when the upper switch is actuated, is also measured and recorded. Hence, referring to Figure 10, at the start of an initialisation routine (100) time T₃ is chosen to be 0.1 ms. A first trial run is then instigated (101). Time tₛ is measured (102) and if tₛ µ T₃ + T₄ (103), then the routine has been successful and is stopped (104). If not, then a determination is made whether the top switch has been actuated (105). If it has, then time T₄ is increased by, for example, 0.1 ms (106) and a further trial run commences. If the top switch has not been actuated during that run then time T₃ is increased by 0.1 ms (107) and a new trial run is commenced.

The routine then continues until all the parameters are correct.

In general then, for the first run a motor pulse of only 0.1 ms is applied to the coil. If the upper switch is not actuated then, on subsequent trials, the motor pulse length is progressively increased in 0.1 ms increments until the switch is finally actuated. On the next trial, a brake pulse of 0.1 ms duration is added on the end of the previous motor pulse value. Thereafter, if the switch was actuated on the previous trial, the brake pulse width is increased by 0.1 ms on the next trial. Conversely, if the switch was not actuated on the previous trial, the motor pulse width is increased by 0.1 ms for next trial. The process continues until the duration of the motor pulse T₃ plus the duration of the braking pulse T₄ is equal to tₛ. This value may be designated Tₘ. When this condition is satisfied, the user can be sure that the coil assembly is only just reaching the upper switch and the braking pulse is exactly compensating for the motor pulse. That is, desired motion has been achieved and the final values of T₃ and T₄ are optimum.

During subsequent routine operation (where shutter opening = upward traverse), the duration of the motor pulse is initially set to T₃ and the duration of the braking pulse is set to (Tₘ - T₃). Typical values for T₃ and Tₘ for the upward traverse are 18.5 ms and 32 ms respectively.

It will be noted that with a motor pulse of length T₃ and a braking pulse of length (Tₘ - T₃), the coil assembly only just reaches the upper proximity switch. However, the upper end-stop is usually located a little beyond the upper switch (say about 3 mm). In order to ensure that the coil assembly actually passes the upper switch and reaches the upper end-stop, during routine operation the switching time tₛ is monitored and if tₛ ≥ Tₘ, then T₃ is increased by a small increment T_{c} (typically 0.3 ms). If tₛ < x.Tₘ where x is typically 0.9, then T₃ is decreased by T_{c}.

The measurements and adjustments are then carried out continually to ensure optimised operation throughout the duration of a process.

The transition from the braking phase to the damping phase is normally initiated, in the case of the upward traverse for example, by actuation of the upper proximity switch. However, if the switch is not actuated for some reason, then the damping phase is automatically initiated at the end of the braking current pulse, if not initiated earlier by the proximity switch.

For the downward traverse, there is an equivalent initialisation procedure to determine the values of T₁, T₂ and Tp (ie. the value of tₛ when tₛ = T₁ + T₂). In this case, actuation of the lower proximity switch is the primary criterion and the measurement of tₛ relates to actuation of the lower switch. In other respects, the principles and strategy are analogous to those for the upward traverse. Typical values for T₁ and Tₚ are 15.5 ms and 29 ms respectively.

As position sensing switches, means other than Hall effect switches may be used. Non-contact switches are preferable to reduce resistance to motion.

In alternative embodiments of the invention, holding current may be applied at both ends of travel of the assembly and this may be particularly necessary if the shutter orientation departs significantly from vertical since the shutter element may be arranged to move in any plane.

In the control algorithm described, the position of the coil assembly is sensed at two positions by two switches. These switches may alternatively be positioned at distances greater or less than 3 mm from their associated end-stops or end-of-travel positions.

Additional or alternative positional or velocity data may be obtained by using different types of switches or position or velocity sensing means.

Where a semiconductor bridge is used to provide the control current, the MOSFET devices shown in the preferred embodiment may be replaced with other suitable devices, non-limiting examples of which are insulated gate bipolar transistors (IGBTs), bipolar transistors or SCRs (thyristors). In the case of devices such as transistors and SCRs, parallel diodes may also be required.

The present invention is usable with shutters of many types of design and configuration. For example, the shutter mirror need not be disposed at 45° to the incident beam as shown in the preferred embodiment and may be disposed at any suitable angle, eg. any angle within 15° to 75° or angles beyond this. The shutter element may equally be an absorptive element, rather than the reflective one shown. If the shutter is a reflective one, it need not be a planar one. The substrate may be a right angle prism for example or be of other shape or configuration. The shutter element need not be linearly translated at all and could be for example, mounted on a rotating element to rotate in and out of position, and driven by a voice coil arrangement.

In addition to the need to direct the principal (high power) laser beam down the beam path, there is also often a practical requirement to direct a low power visible beam ('a pointing beam') down the beam path. This is particularly the case when the principal beam has a wavelength outside the visible spectrum, ie. the principal beam (such as a 1064 nm YAG beam) is invisible.

A low power visible pointing beam allows the components along the beam path to be visually aligned safely to the beam path. It also indicates to the user where the principal beam will be incident - for example, on a workpiece - when it subsequently passes down the beam path. This is particularly useful for example when programming a robotic beam delivery head in teaching mode.

The pointing beam is typically provided by a 2mW helium-neon laser (wavelength 633 nm) or by a 3mW semiconductor diode laser (wavelength 635 nm) in preferred embodiment, although it can of course be provided by other types of laser and/or different wavelengths and powers.

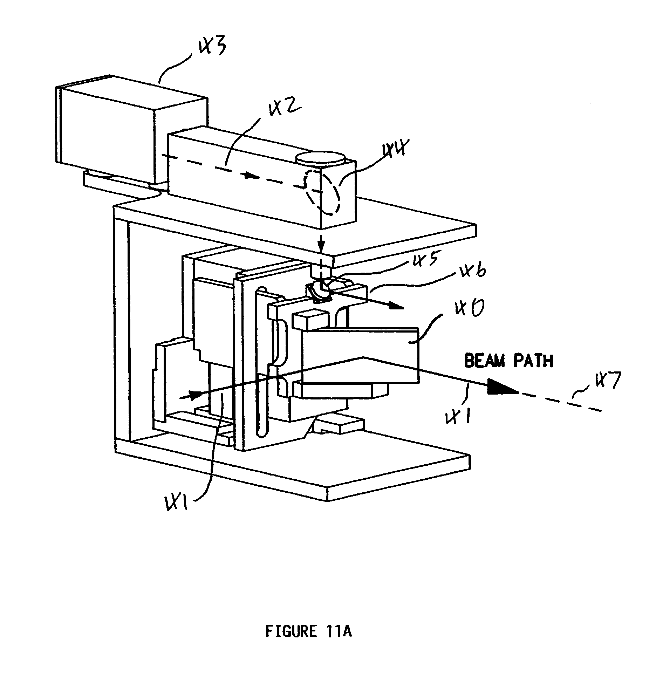

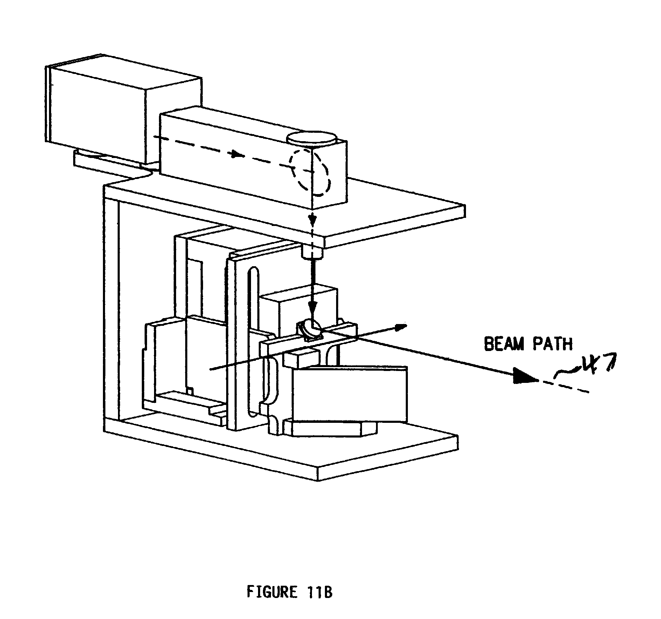

Referring to Figures 11(a) and (b), a shutter mirror 40 for a principal beam 41 is moved generally vertically into and out of the beam path of the principal beam by an actuator mechanism.

A second, independent, laser beam is used as a pointing beam and is provided by, for example, a laser diode unit 43. The pointing beam traverses generally horizontally to a first, fixed, auxiliary mirror 44 which directs the beam vertically downward to a second auxiliary mirror 45. The second mirror 45 is mounted on an extension of a mount 46 that carries the main shutter mirror 40 and is thereby displaced with the shutter mirror. The second mirror is arranged at a fixed angle so as to direct the pointing beam 42 horizontally in a direction parallel to the principal beam path 47.

In operation, when the shutter mirror 40 is at its upper position (shutter 'open'), the pointing beam lies above the beam path, as shown in Figure 11(a). By correctly arranging the spacing of the mirror 45 relative to the shutter mirror 40, then when the shutter mirror is at its lower position, shown in Figure 11(b), the pointing beam axis is coincident with the beam path axis, so that the pointing beam traverses the beam path.

## Claims

1. A method of actuating a shutter element affecting the path of a laser beam, the shutter element being driven by an electrically conductive coil mechanism, the method comprising applying a drive current to the coil for a first period of travel; reversing the current direction to provide a braking force for a second period of travel; and, during a third period, alternating between periods of electrical damping and periods in which an electrical holding current is applied.

2. A method as claimed in Claim 1, wherein electrical damping is obtained by substantially shorting the coil.

3. A method as claimed in Claim 2, wherein alternation between electrical damping and holding is achieved by alternating between periods in which the coil is shorted, and holding periods in which current is increased to a predetermined level.

4. A method as claimed in Claim 3, wherein the damping periods are longer than the holding periods.

5. A method as claimed in any of the preceding claims, wherein the damping is initiated when the coil reaches a predetermined position in its movement.

6. A method as claimed in any preceding claim further comprising an optimisation routine, such that the periods of drive current and braking current are incrementally adjusted until optimised operation is achieved.

7. A method as claimed in Claim 1, further comprising a method of actuating said shutter element in an opposite direction, comprising applying a drive current to the coil for a period of travel; reversing the current direction to provide a braking force for a subsequent period of travel, and, during a further period, electrically damping the movement of the coil.

8. A method as claimed in Claim 7, wherein said opposite direction represents a downward traverse of a shutter.

9. An actuator for a shutter for a laser beam, comprising an electrically conductive coil movable in a permanent magnetic field when a current is applied to the coil, and connected to move a shutter element when the coil moves; and means for providing electrical current to the coil, wherein the current-providing means comprises means for applying a drive current in a first direction; means for applying a braking current in the reverse direction; means for providing electrical damping, and; means for alternating between periods of electrical damping and periods of electrical holding.

10. An actuator as claimed in Claim 9, wherein the means for providing electrical damping comprise means for substantially shorting the coil.

11. An actuator as claimed in Claim 9 or Claim 10, wherein the current providing means comprises a bridge arrangement adapted to selectively vary the direction of current through the coil.

12. An actuator as claimed in any of Claims 9 to 11, wherein the means for alternating between electrical damping and electrical holding comprises means for alternating between periods of electrical shorting of the coil and periods in which current is increased to a predetermined level.

13. An actuator as claimed in any of Claims 9 to 12 including means for detecting when the coil has reached one or more predetermined positions in its movement and generating a signal, and means for using the signal to control the electrical current.

14. An actuator as claimed in any of Claims 9 to 13, further comprising a beam directing means for an auxiliary laser beam, the beam directing means being mounted in fixed relation to the shutter element to move therewith.

15. An actuator as claimed in Claim 14, wherein the beam directing means is an optical element arranged to direct the auxiliary beam in a direction parallel to the axis to which a principal laser beam is directed by the shutter element.
